# EUROPEAN PATENT APPLICATION

(11) **EP 2 410 295 A2**
(43) Date of publication of application: **25.01.2012**
(21) Application number: 11174593.1
(22) Date of filing: 19.07.2011
(51) Int. Cl.: G01C 23/00

(54) **SYSTEMS AND METHODS FOR SEARCHING AND DISPLAYING FLIGHT PLANS**

(30) Priority: 22.07.2010 US 841738
(71) Applicant: Honeywell International, Inc., Morristown, New Jersey 07962-2245 (US)
(72) Inventor: Mishra, Radhesh, Morristown, NJ New Jersey 07962-2245 (US)
(74) Representative: Buckley, Guy Julian

(57) **Abstract**

An aircraft system is provided for an aircraft having a flight plan with a plurality of flight plan elements. The system includes a user interface configured to receive an input from a user corresponding to a selected flight plan element within the flight plan; a processor coupled to the user interface, the processor configured to receive the input from the user interface and generate first display signals and second display signals based on the input; a first display coupled to the processor and configured to display the selected flight plan element within a textual list based on the first display signals; and a second display coupled to the processor and configured to display the selected flight plan element within a navigation map based on the second display signals.

## Description

### FIELD OF THE INVENTION

The present invention generally relates to aircraft systems and methods, and more particularly, the present invention relates to aircraft systems and methods for searching and displaying flight plans.

### BACKGROUND

Aircraft and aircraft systems continue to advance in sophistication. Flight management systems are used on aircraft to integrate information from data sources and to perform, or assist a user in performing, functions related to, for example, navigation, flight planning, guidance and navigation, and performance management. Many aircraft have a visual display system coupled to the flight management system. The visual display system may include one or more types of displays, including a Multifunction Control Display Unit (MCDU) and a navigation display. For example, the MCDU may display a number of different screen pages in which the user can obtain information such as the flight plan and perform related functions. The navigation display generally shows a plan view (or map view) of the position of the aircraft.

MCDUs may be problematic in that, generally, a user must scroll through a number of screen pages to obtain a desired portion of a flight plan or other type of information. This can be an issue because flight plans can be over forty pages and require long sequential navigations to arrive at the desired page. The process of viewing desired information may be time consuming and inefficient, particularly because certain users often seek a particular screen page.

Accordingly, it is desirable to provide an aircraft visual display system in which a desired portion of the flight plan is more efficient and easy to view. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, an aircraft system is provided for an aircraft having a flight plan with a plurality of flight plan elements. The system includes a user interface configured to receive an input from a user corresponding to a selected flight plan element within the flight plan; a processor coupled to the user interface, the processor configured to receive the input from the user interface and generate first display signals and second display signals based on the input; a first display coupled to the processor and configured to display the selected flight plan element within a textual list based on the first display signals; and a second display coupled to the processor and configured to display the selected flight plan element within a navigation map based on the second display signals.

In accordance with another exemplary embodiment, a method is provided for displaying a flight plan on an aircraft system with a user interface, a multifunctional control display unit (MCDU), and a navigation display. The method includes selecting a flight plan element with the user interface; searching the flight plan for the flight plan element; displaying the flight plan element on the MCDU in a textual list; and displaying the flight plan element on the navigation display in a map view.

### BRIEF DESCRIPTION OF THE DRAWINGS

The present invention will hereinafter be described in conjunction with the following drawing figures, wherein like numerals denote like elements, and wherein:

FIG. 1 is a schematic representation of an aircraft system with a visual display system in accordance with an exemplary embodiment;

FIG. 2 is a view of the visual display system of FIG. 1 in a first mode;

FIG. 3 is a first view of the visual display system of FIG. 1 in a second mode;

FIG. 4 is a second view of the visual display system of FIG. 1 in the second mode;

FIG. 5 is a third view of the visual display system of FIG. 1 in the second mode; and

FIG. 6 is a flow chart of a method for displaying flight plan information in accordance with an exemplary embodiment.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Broadly, exemplary embodiments described herein include an aircraft visual display system with a multifunctional control display unit (MCDU) and a navigation display. In accordance with an exemplary embodiment, the system enables direct page navigation of waypoints or other flight plan elements within the flight plan on the MCDU display. For example, a user enters a desired waypoint on the keyboard of the MCDU, and upon pressing a key such as the FPL key, the MCDU displays the flight plan page associated with that waypoint. Additionally, the navigation display provides a navigation view associated with the desired flight plan element.

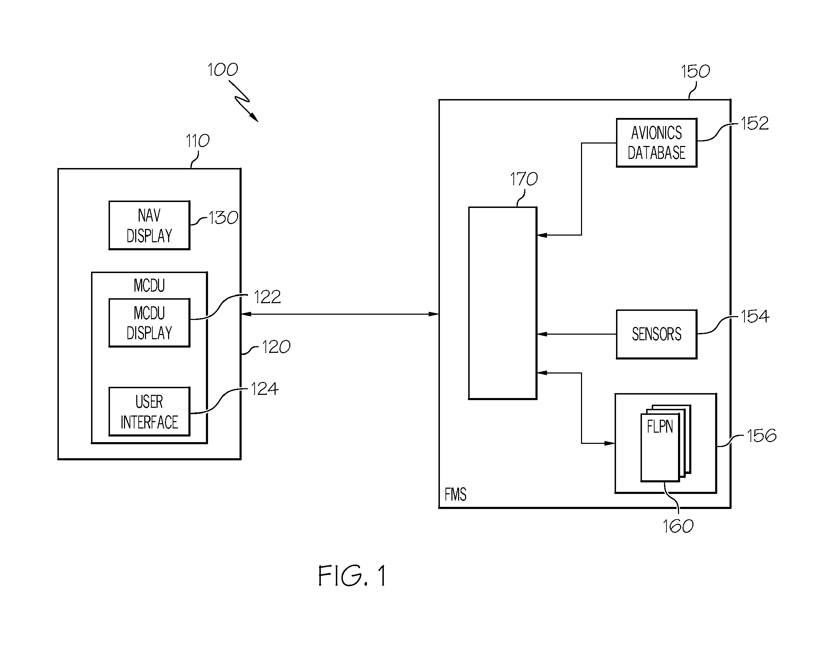

FIG. 1 is a schematic representation of an aircraft system 100 with a visual display system 110 coupled to a flight management system (FMS) 150. The visual display system 110 generally includes an MCDU 120 with a MCDU display 122 and a user interface 124. The visual display system 110 further includes a navigation display 130, as will be discussed in greater detail below. Generally, the aircraft system 100 will be housed entirely within an aircraft (not shown). However, there may be some instances in which one or more of the components are remote from the aircraft, such as in a command center.

The FMS 150 is coupled to the visual display system 110 and generally includes an FMS processor 170 coupled to a number of data sources 152, 154, 156. As discussed in greater detail below, the data sources 152, 154, 156 include an avionics database 152, sensors 154, and flight plan storage 156. Generally, the FMS 150 integrates information from the data sources 152, 154, 156 to perform, or aid the user in performing, any aircraft function, including navigation, flight planning, guidance and control, and performance management.

The FMS processor 170 encompasses one or more functional blocks used to interact with the visual display system 110 and the data sources 152, 154, 156. In this regard, the FMS processor 170 may include any number of individual microprocessors, memories, storage devices, interface cards, and other components. As discussed in greater detail below, the FMS processor 170 may execute logic that enables search and display of flight plan information on the visual display system 110. The FMS processor 170 may include or have access to any suitable type of memory or data storage, such as for example, RAM, ROM, EEPROM, flash memory, CD, DVD, or other optical storage, magnetic storage devices, or any other medium that can be used to store and access desired information by the FMS processor 170.

The avionics database 152 generally stores data related to the aircraft, including waypoint information, airway data, navigational aids, obstacles, approach information, and/or other data. The avionics database 152 may be, for example, a navigation database and/or a terrain database. The sensors 154 may collect or receive aircraft data, including, for example, bearing information, air/ground speed, attitude information, distance information, left/right deviation, altitude data, longitude and latitude data, and/or other aircraft data. The sensors 154 may include any number of receivers, infrared lasers, millimeter wave cameras or other sensor elements for obtaining information about the aircraft or the surrounding environment, including inertial references, navigation radio, and engine and fuel sensors.

During operation, the FMS processor 170 may access information from the avionics database 152, and possibly the sensors 154, to create a flight plan 160 based on input from the pilot or other user. In general, the flight plan 160 is one or more detailed descriptions of the path to be followed by the aircraft during a scheduled flight. In particular, the flight plan 160 is formed by flight plan elements that include a chronological sequence of waypoints described by name, position, altitude and time to be overflown or sequenced. Other flight plan elements may include navaids, pseudo-waypoints, runways, airports, and discontinuities. The flight plan 160 is stored in the flight plan storage 156 and may generally include active, inactive, secondary, and temporary flight plans. In one exemplary embodiment, active flight plans are flight plans that the aircraft follow to fly; temporary flight plans are modifications of active flight plans; inactive flight plans are flight plans that is not currently being used for flying but may be activated; and secondary flight plans are the backup flight plans that may be used in the place of active flight plans. Characteristics and display of the flight plan 160 will be discussed in greater detail below.

As noted above, the FMS 150 is coupled to the visual display system 110, which includes the MCDU 120 and the navigation display 130. The MCDU 120 displays information from the FMS 150 on the MCDU display 122 and enables user interaction with the FMS 150 via the user interface 124. The user interface 124 may include, for example, a keyboard, knobs, a mouse, touch-screen and/or other mechanisms for function, display, and/or cursor control of information on the MCDU display 122. The MCDU display 122 may include one or more display monitors suitable for displaying various symbols and information, such as, for example, cathode ray tube (CRT), liquid crystal display (LCD), Heads Up Display (HUD), and Helmet Monitored Display (HMD).

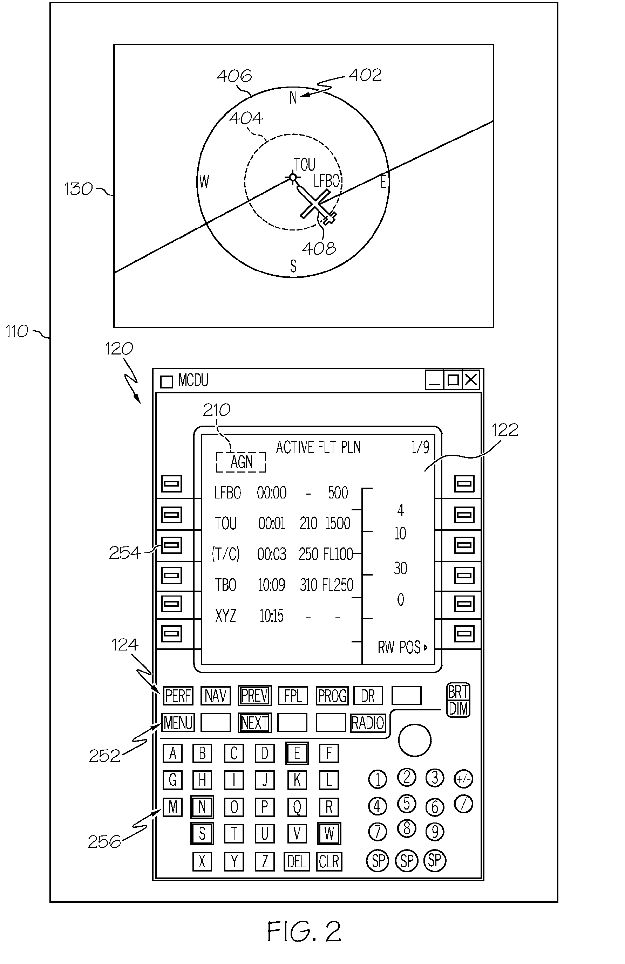

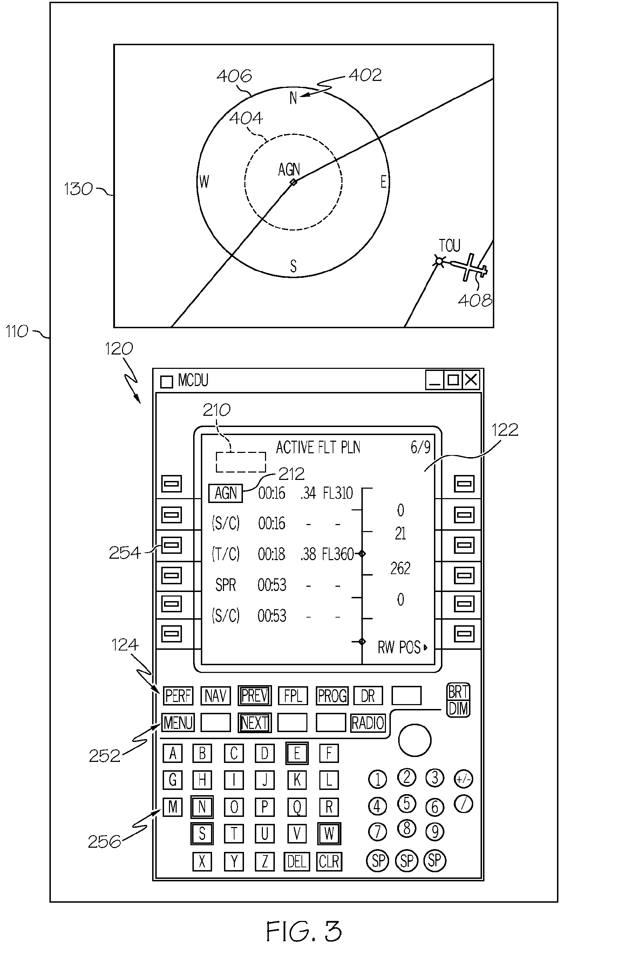

The navigation display 130 is any suitable display device for displaying a navigation view for the aircraft, which generally includes a plan view or map view of navigation information. As such, the FMS processor 170 may include a graphics generator or display engine to generate suitable display signals and display desired information. In particular, the FMS 150 may generate display signals corresponding to the flight plan 160 for display on the MCDU display 122 and the navigation display 130. Like the MCDU display 122, the navigation display 130 may include one or more display monitors suitable for displaying various symbols and information, such as, for example, cathode ray tube (CRT), liquid crystal display (LCD), Heads Up Display (HUD), and Helmet Monitored Display (HMD). The MCDU 120 and navigation display 130 are discussed in greater detail below with reference to FIGS. 2 and 3.

FIG. 2 is a more detailed view of the visual display system 110 of FIG. 1, including the MCDU display 122 and the user interface 124 of the MCDU 120 and the navigation display 130. Although FIG. 2 depicts the MCDU display 122, the user interface 124, and the navigation display 130 as being proximate to one another, in other embodiments, the various components may be more removed from one another or in different areas of the aircraft altogether. As discussed in further detail below, the MCDU display 122 and navigation display 130 in FIG. 2 are functioning in a first mode or an active flight plan mode.

As noted above, the MCDU display 122 provides information to a user relating to navigation and control of the aircraft. As shown, the MCDU display 122, in the first mode, shows a current page of a flight plan, such as flight plan 160 provided by the FMS 150 (FIG. 1), which is discussed in greater detail below. The information on the MCDU display 122 may be manipulated by interaction with the user interface 124, which includes one or more function keys 252, one or more line select keys 254, and keys of a multifunction keyboard 256. The function keys 252 are each associated with one or more screen pages or functions that can be displayed on the MCDU display 122. For example, the function key 252 labeled FPL is a flight plan key. Line select keys 254 along the side of the MCDU display 122 enable the user to perform functions associated with the navigation and control of the aircraft specific to the screen page displayed in the MCDU display 122. For example, the line select keys 254 allow the user to navigate the screens, enter flight plan data, performance data, and navigation data, as well as initiating functions such as printing the flight plan and aligning the inertial reference system. The multifunction keyboard 256 is formed by a keypad device that includes, for example, the alphabet, numbers from zero to nine, mathematical operator keys, decimal, clear, delete, space, etc. Moreover, the multifunction keyboard 256 may include any number of additional knobs, switches, buttons, keys, and the like, all of which may be configured to implement an effective interface between the user and the FMS 150 (FIG. 1).

In the example illustrated in FIG. 2, the MCDU display 122 displays the first page of a nine page flight plan. In this example, the first page of the active flight plan is a textual list of five waypoints, e.g., "LFBO", "TOU," and so on. In addition to the waypoint designation, other flight plan elements such as navaids, pseudo-waypoints, runways, and airports may be provided..For example, "(T/C)" in FIG. 2 indicates a pseudo-waypoint. Similar textual designations may be provided for other flight plan elements, including navaids, runways, and airports. In some embodiments, the flight plan may be forty or more pages. In conventional MCDUs, if a user wanted to, for example, view a waypoint that was not displayed on the first page, the user would have to press the NEXT key of the function keys 252 to advance to the next page. The user would continually scroll through the flight plan pages and scan the listed waypoints, until the user identifies the desired waypoint. In any event, the user may select a waypoint on the MCDU display 122 via the user interface 124 and perform a function or operation with respect to the selected waypoint, such as a put hold, a direct to, an enter constraint, a new destination, and the like.

The MCDU display 122 further includes a scratchpad area 210. The scratchpad area 210 may be, for example, part of the MCDU display 122 implemented as a GUI element or any other suitable electronic display device. In general, the FMS processor 170 receives the user input from the user interface 124 and displays the input within the scratchpad area 210. As such, the user may monitor the data for accuracy as it is being typed.

The navigation display 130 is generally a plan map view with cardinal directions 402 and range rings 404, 406 arranged such that North is at the top of the screen. The navigation display 130 further displays aircraft symbology 408 that indicates the position of the aircraft along a flight plan path 410, which may correspond to the flight plan illustrated in FIG. 2. Waypoints are indicated with alphanumeric identifiers such as "FLBO" and "TOU." Although not shown in FIG. 2, other navigation information such as the location of airports and geographical features may be provided, as well as aircraft data such as air speed, bearing, and tracking.

In the first mode view of FIG. 2, the navigation display 130 is centered on the next waypoint, which in this case is the "TOU" waypoint, and the aircraft is passing over the "LFBO" waypoint. Accordingly, in the first mode view of FIG. 2, the MCDU display 122 and the navigation display 130 are each focused on the current waypoint (e.g., LFBO) or the immediately upcoming (e.g., TOU) waypoints as the current position and trajectory of the aircraft.

However, in accordance with an exemplary embodiment, the user may request a particular element of the flight plan by entering the request into the multifunction keyboard 256. For example, if the user wants to view information associated with the waypoint "AGN," the user types the phrase "AGN" into the multifunction keyboard 256, and the phrase is displayed in the scratchpad area 210 of the MCDU display 122. The user then presses the FPL key of the function keys 252 to initiate a search for the designated waypoint. In an alternate embodiment, other mode keys or actuating functions may be used. In response, the visual display system 110 transitions into a second mode (or search mode).

FIG. 3 is a first view of the visual display system 110 of FIG. 1 in the second mode. As noted above in reference to FIG. 2, the user initiated a search for a desired waypoint, i.e., the "AGN" waypoint. In this scenario, the FMS 150 (FIG. 1) searches the flight plan storage 156 (FIG. 1) for the requested flight plan element and generates the appropriate display signals for the visual display system 110. The FMS 150 may use progressive filtering to search for the flight plan element.

Based on the flight plan search, the MCDU display 122 displays the flight plan page that includes the "AGN" waypoint. As shown in the exemplary embodiment of FIG. 3, the "AGN" waypoint is included on page six of the flight plan. As such, the MCDU 120 jumps directly to a non-sequential, desired flight plan page with a single command instead of requiring the user to scroll through a number of pages. The desired "AGN" waypoint may be highlighted, as indicated by the outline 212 in FIG. 3.

As in FIG. 2, the navigation display 130 illustrated in FIG. 3 is generally a plan map view with cardinal directions 402, range rings 404, 406, and aircraft symbology 408 that indicates the position of the aircraft along the flight plan path 410. However, contrary to the mode displayed in FIG. 2, the navigation display 130 in the mode of FIG. 3 is centered on the waypoint searched and viewed via the MCDU 120. As such, the "AGN" waypoint is at the center of the navigation display 130 and the aircraft symbology 408 and other waypoints are off-center or not displayed. The user does not have to scroll around or search the navigation display 130 to view the desired waypoint. Accordingly, exemplary embodiments enable a simultaneous navigation and flight plan views of a desired waypoint and an unambiguous viewing location of the waypoint on a navigation map.

Although FIGS. 2 and 3 demonstrate a scenario in which an entire waypoint name search was initiated by the user, in another exemplary embodiment, it is not necessary for the user to enter the complete waypoint to jump to a desired flight plan element. For example, if the user enters "AG," and no other waypoints or elements in the flight plan start with "AG," the MCDU display 122 will jump to the "AGN" waypoint. If multiple elements may be represented by a search term, the MCDU display 122 may provide a selection of waypoints or elements in a drop down menu. For example, if the user enters "A" into the scratchpad 210 and presses the FPL key, the MCDU display 122 displays all of the waypoints or elements in the flight plan that begin with the letter "A." The user then selects the desired "AGN" waypoint from the menu, and the MCDU display 122 displays the flight plan page with the "AGN" waypoint. Similarly, if the flight plan includes duplicate waypoints, the MCDU display 122 may display the list of duplicate waypoints for selection by the user via the user interface 124.

Accordingly, direct flight plan page and navigation views are accessible according to waypoint name. Referring additionally to FIG. 1, in general, the FMS processor 170 uses page logic to sort and identify the appropriate flight plan page from the flight plan. The processor 170 may search for waypoints in the active flight plan and temporary flight plans.

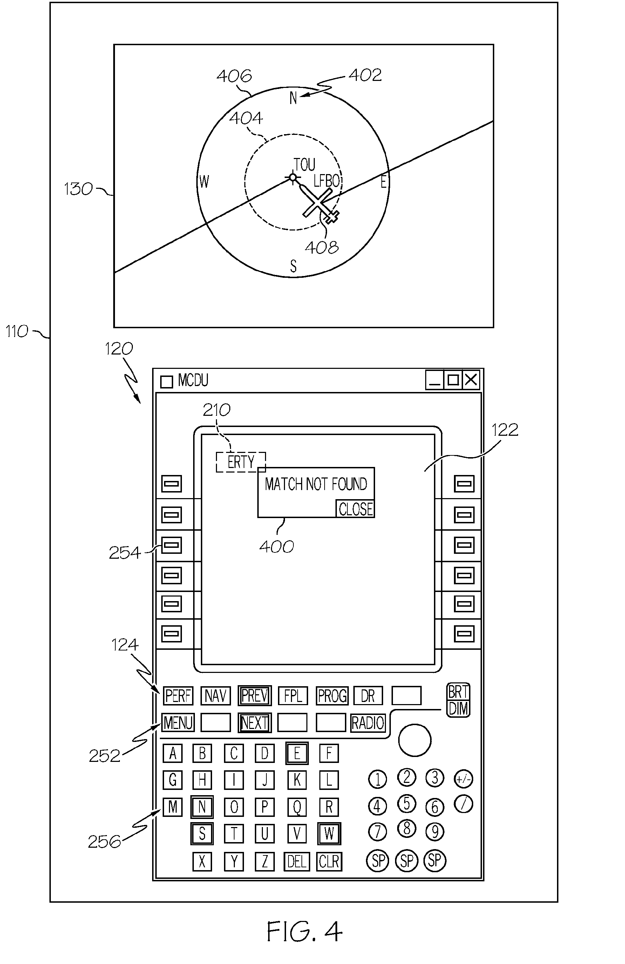

FIG. 4 is a second view of the visual display system 110 of FIG. 2 in the second mode. If, in the view of FIG. 2, the user searches for a waypoint or other flight plan element that is not included in the flight plan, such as the "ERTY" waypoint, the MCDU display 122 will display a window 400 indicating that the waypoint is not found, as shown in FIG. 4. In this scenario, the navigation display 130 displays the current or upcoming waypoint such as in the first mode shown in FIG. 2..As a further alternative, if a user attempts to search a blank entry, the MCDU display 122 displays a window requesting an appropriate entry, such as a window that displays "ENTER STRING TO SEARCH."

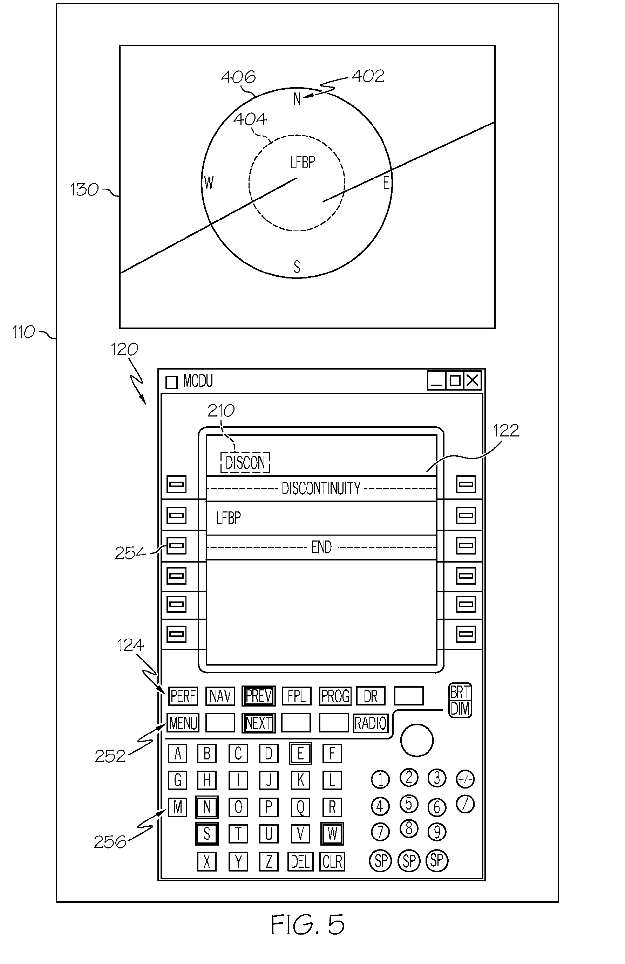

FIG. 5 is a third view of the visual display system of FIG. 1 in the second mode. In the view of FIG. 5, the user initiates a search for discontinuities in the flight plan by entering "DISCON" on the user interface 124, as indicated by the "DISCON" in the scratchpad area 210. The FMS 150 may search the flight plan for discontinuities by searching for flight path legs that are not connected to other flight path legs. In response, the MCDU display 122 displays any discontinuities in the flight plan, i.e., the "LFBP" waypoint. In this scenario, the navigation display 130 remains in the current view.

In further exemplary embodiments, the MCDU 120 may respond to additional user commands, such as those that indicate a desired page position within the flight plan. For example, if the user types the phrase "MID" into the multifunction keyboard 256 and presses the FPL key, the MCDU display 122 displays the midpoint of the flight plan, e.g., page five of the nine page flight plan. As another example, if the user types the phrase "END" into multifunction keyboard 256, and presses the FPL key, the MCDU display 122 displays the last page of the flight plan, e.g., page nine of the nine page flight plan. In a further exemplary embodiment, if the user types a page number into the multifunction keyboard 256 and presses the FPL key, the MCDU display 122 displays the requested page. For example, if the user types "6" and presses the FPL key, the MCDU display 122 displays page six of the flight plan. Also, an alternative or in addition to using the depicted user interface 124 and function or line select keys 252, 254, the user may input instructions via a microphone. The user can activate the MCDU 120 to receive audio instructions via a designated keystroke or other physical input or a predetermined audible command. The MCDU 120 may provide a visible indication that the visual display system 110 is in audio mode. The FMS processor 170 may execute a speech recognition program that translates the speech into digital signals representing text. The digital signals may then be used as the alphanumeric entry on the scratchpad area 210 to direct the MCDU 120 to the desired page. In other embodiments, the spoken command itself is not displayed.

In one exemplary embodiment, designated commands such as those discussed above are stored in an AMI (airline modifiable information) data table that forms part of an AMI file or a data table stored in the FMS 150. In other words, text commands, such as "MID," "END," and numeric commands are page mapped with a text list that identifies designated flight plan pages. In these cases, the user may utilize a ground based software tool (GBST) or user application definition files (UADF) to modify the display and function of the MCDU 120, including the accessible text commands. Typically, the FMS 150 reads the data in an AMI file and provides runtime parameters to the visual display system, which enables the MCDU 120 and navigation display 130 to directly navigate to the desired flight plan element. In general, any suitable mechanism for linking user inputs with flight plan elements may be provided.

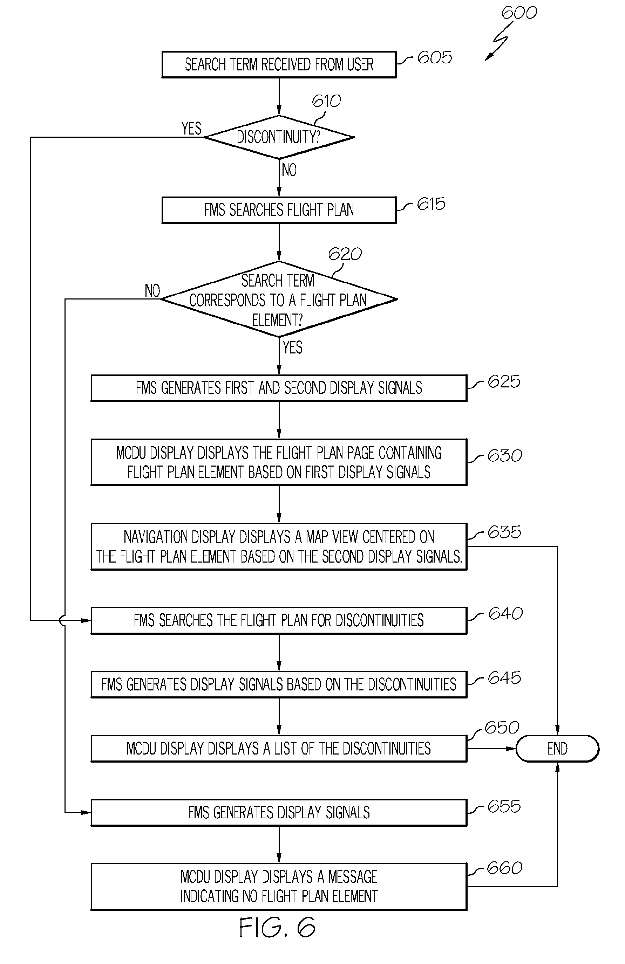

FIG. 6 is a flow chart of a method 600 for displaying flight plan information in accordance with an exemplary embodiment. The method 600 may be implemented with the aircraft system 100 described above. As such, reference is additionally made to FIGS. 1-5 in the discussion below. In a first step 605, the user provides a search term to the system 100, for example, by inputting the search term on the user interface 124. In a step 610, if the user is not searching for a discontinuity, as indicated by a "DISCON" input, the method 600 will proceed to step 615. In step 615, the FMS processor 170 searches the flight plan 160 stored in flight plan storage 156 for the search term. In step 620, the FMS processor 170 determines if the search term corresponds to a flight plan element within the flight plan 160. The flight plan element can be, for example, a waypoint identifier. If the flight plan element is identified in step 620, the FMS processor 170 generates first and second display signals, respectively, for the MCDU display 122 and the navigation display 130 in a step 625. In step 630, the MCDU display 122 receives the first display signals from the FMS processor 170 and displays the flight plan page containing, and optionally highlighting, the desired flight plan element. For example, the MCDU display 122 may display the waypoint information corresponding to the search term entered on the user interface 124 in step 605. In step 635, the navigation display 130 receives the second display signals from the FMS processor 170 and displays a map view centered on the desired flight plan element. For example, the navigation display 130 may display a map view centered on a desired waypoint.

If, in step 610, the user is searching for a discontinuity, the method 600 proceeds to step 640 in which the FMS processor 170 searches the flight plan 160 stored in flight plan storage 156 for discontinuities. In step 645, the FMS processor 170 generates display signals based on the discontinuities, and in step 650, the MCDU display 122 receives the display signals and displays a list of the discontinuities within the flight plan 156.

If, in step 620, the FMS processor 170 determines that the search term does not correspond to a flight plan element in the flight plan 160 stored in flight plan storage 156, the FMS processor 170 generates display signals in a step 655 and the MCDU display 122 displays a message indicating that no such element exists in a step 660.

Accordingly, exemplary embodiments enable direct navigation within the flight plan on the MCDU and navigation display. This permits the aircraft operator to focus on the task of appropriately routing the aircraft instead of focusing on scrolling through the flight plan pages of the MCDU or around a navigation display. As such, exemplary embodiments decrease flight crew heads-down time, ease pilot workload, and improve the efficiency with which pilots operate their aircraft. Exemplary embodiments expedite processing of flight plan information, reduce the amount of required user interaction, and efficiently display information about a desired waypoint or other flight plan element. Although the system 100 and method 600 are discussed above with reference to aircraft, exemplary embodiments may be used in various embodiments employing various types of crafts configured to use displays, such as submarines, space craft, lunar landing craft, and unmanned air vehicles (UAV), etc.

An embodiment is described herein in terms of a functional block diagram. It should be appreciated that such functional blocks may be realized in many different forms of hardware, firmware, and or software components configured to perform the various functions. For example, embodiments of the present invention may employ various integrated circuit components, e.g., memory elements, digital signal processing elements, look-up tables, and the like, which may carry out a variety of functions under the control of one or more microprocessors or other control devices. Such general techniques are known to those skilled in the art and are not described in detail herein. Additionally, the one or more processors includes or functions with software programs, firmware or computer readable instructions for carrying out various methods, process tasks, calculations, control functions, and the generation of display signals, time notations, and other data used in the operation of the multi-view display system. These instructions are typically stored on any appropriate medium used for storage of computer readable instructions such as floppy disks, conventional hard disks, CD-ROM, flash ROM, nonvolatile ROM, RAM, and other like medium.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft system (100) for an aircraft having a flight plan with a plurality of flight plan elements, the system comprising:
a user interface (124) configured to receive an input from a user corresponding to a selected flight plan element within the flight plan;
a processor (170) coupled to the user interface (124), the processor (170) configured to receive the input from the user interface (124) and generate first display signals and second display signals based on the input;
a first display (122) coupled to the processor (170) and configured to display the selected flight plan element within a textual list based on the first display signals; and
a second display (130) coupled to the processor (170) and configured to display the selected flight plan element within a navigation map based on the second display signals.

2. The aircraft system (100) of claim 1, wherein the user interface and first display (122) form a portion of a multifunctional control display unit (MCDU).

3. The aircraft system (100) of claim 1, wherein the user interface (124) is a keyboard (256).

4. The aircraft system (100) of claim 1, wherein the second display (130) is a navigation display (130).

5. The aircraft system (100) of claim 1, wherein the input corresponds to a waypoint of the flight plan and the first display (122) is configured to display a flight plan page that includes the waypoint.

6. The aircraft system (100) of claim 5, wherein the input is a complete waypoint name.

7. The aircraft system (100) of claim 5, wherein the input is a partial waypoint name.

8. The aircraft system (100) of claim 1, wherein the input corresponds to a position within the flight plan and the first display (122) is configured to display a flight plan page that corresponds to the position.

9. The aircraft system (100) of claim 8, wherein the position is a midpoint of the flight plan.

10. The aircraft system (100) of claim 8, wherein the position is the end of the flight plan.
